# EUROPEAN PATENT SPECIFICATION

(11) **EP 0 435 288 B1**
(45) Date of publication and mention of the grant of the patent: **18.09.1996**
(21) Application number: 90125581.0
(22) Date of filing: 27.12.1990
(51) Int. Cl.: H04N 9/31, G02F 1/13

(54) **Image projector**
Bildprojektor
Projecteur d'image

(30) Priority: 28.12.1989 JP 344845/89; 16.01.1990 JP 4519/90
(43) Date of publication of application: 03.07.1991
(73) Proprietor: CANON KABUSHIKI KAISHA, Tokyo (JP)
(72) Inventor: Kurematsu, Katsumi, c/o Canon K. K., Ohta-ku, Tokyo (JP); Oshima, Shigeru, c/o Canon K. K., Kawasaki-shi, Kanagawa-ken (JP); Minoura, Nobuo, c/o Canon K. K., Ohta-ku, Tokyo (JP)
(74) Representative: Tiedtke, Harro, Dipl.-Ing.

(56) References cited:
- WO-A-87/00640
- WO-A-88/09102
- WO-A-89/01272
- DE-A- 3 720 375

## Description

This invention relates to an image projector according to the preamble of claim 1. Heretofore, in a projector using a liquid crystal light modulator, as described in JP-A-5152233, JP-A-60179723; JP-A-61102892, JP-A-61167297, JP-A-62125791, JP-A-621391, JP-A-6358414, optical images from liquid crystal devices of different color lights (hereinafter referred to as "LCDs") have been color-synthesized by a dichroic mirror and projected onto a screen by a projection lens, and although not particularly mentioned, sheet-like polarizing filters virtually made integral with the LCDs have been used as the polarizers and analyzers of the LCDs.

However, in the prior art described above, when light applied to the LCDs is intensified to improve luminance, particularly the polarizing filters on the analyzer side generate heat due to absorption of the light. This heat generation increases the temperature of the liquid crystal of the LCDs and further causes a change in the phase of the liquid crystal, thus reducing the function of the LCDs.

In order to eliminate such temperature rise of the liquid crystal caused by the absorption of light of the polarizing filters, it would occur to mind to use polarizing beam splitters instead of the polarizing filters as the analyzers. However, if such polarizing beam splitters are arranged correspondingly to the LCDs of different color lights, there will arise the problem that the system becomes bulky.

A generic image projector is known from the DE-A-3 720 375. It uses two dichroic prisms, each of which is provided on three sides thereof with three generators for modulating light beams and for generating images. Each of the generators operates reflectively and is assigned to image extract of a given color.

Further image projectors are known from the WO-A-8809102, WO-A-8700640 and WO-A-8901272, respectively. It is the object of the present invention to further develop the image projector according to the preamble of claim 1 such that a compact image projector is achieved.

This object is achieved by the features of the new claim 1.

According to the invention, the generators for modulating the light beams and for generating images comprising polarized light beams are of transmission type so that a compact structure is realized. Furthermore, the optical coupler element also has the function of the analyzer of the generator so that a compact structure is realized.
Advantageous further developments are set out in the dependent claims.

In a preferred form of the present invention, said light supplying means has a lamp emitting white light, a converter for converting said white light into a white rectilinearly polarized light, and an optical system provided with a plurality of dichroic mirrors for dividing said white polarized light into different colors.

The colors of said first, second and third lights are such that for example, one of them is red and another is green and the remainder is blue. In the present invention, a single projection lens system, or a pair of projection lens systems are usable as the projection optical system for projecting red, green and blue images.

In the present invention, use is made of a polarizing beam splitter comprising an optical member of cubic or other configuration comprising a pair of prisms cemented together and multilayer film formed on the cemented surface thereof, or an optical member comprising a transparent plate having multilayer film formed thereon. The configuration of the dichroic mirror may be cubic or plate-like. In a preferred form of the present invention, each optical member is arranged so that the light dividing surfaces of these optical members may be parallel to each other. This is for the purpose of making the system compact.

The liquid crystal light modulators used in the present invention may be ones having a liquid crystal layer of the ECB (electrically controlled birefringence) type, ones provided with a liquid crystal layer of the 90° twisted nematic type, or ones provided with a liquid crystal layer of the 45° twisted nematic type, and in any of these, the liquid crystal molecules of the liquid crystal layer are driven by an electric field or the like to change the optical characteristic thereof, thereby effecting the control of the polarization of light. Also, the liquid crystal light modulators are of the transmission type which modulates incident light while transmitting the incident light therethrough.

Figure 1 shows a first embodiment of the projector of the present invention.

Figure 2 shows a second embodiment of the present invention.

Figure 3 shows a third embodiment of the present invention.

Figure 4 is a graph showing the characteristic of a polarizing beam splitter 21 shown in Figure 3.

Figure 5 shows a fourth embodiment of the present invention.

Some embodiments of the present invention will hereinafter be described with reference to the drawings.

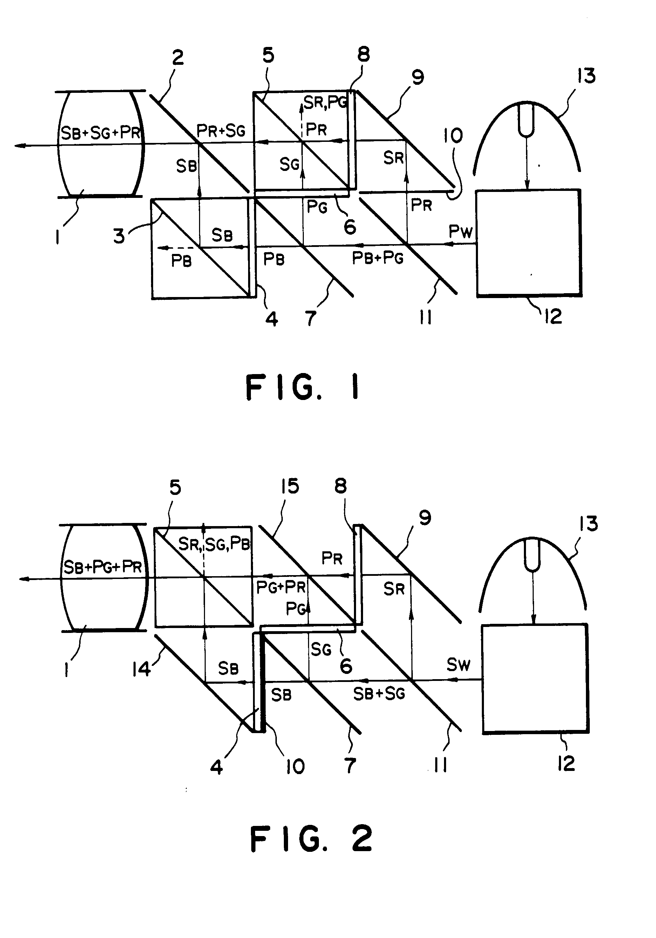

Figure 1 shows a first embodiment of the present invention.

The projector of this embodiment is of such a construction that white light emitted from a white light source (hereinafter referred to as the "light source") 13 provided with a high luminance lamp is converted into a polarized light whose plane of polarization is uniform by a polarization converting module 12, whereafter said polarized light is separated into lights of red, green and blue colors (hereinafter referred to as the R light, the G light and the B light, respectively) which are rectilinearly polarized lights by first and second dichroic mirrors (hereinafter referred to as the "DMs") 11 and 17, a total reflection mirror 9 and a λ/2 plate 10, and first to third liquid crystal light bulbs (hereinafter referred to as the "LCDs") 8, 6 and 4 for generating red, green and blue images corresponding to the respective color lights are irradiated with the separated R light, G light and B light and further, the B light, G light and R light transmitted through the respective LCDs 8, 6 and 4 are synthesized by a third dichroic mirror 2 (hereinafter referred to as the "DM2") and polarizing beam splitters (hereinafter referred to as the "BSs") 3 and 5 disposed on the projection lens system 1 side, as will be described later, and are directed to the projection lens 1 and the red, green and blue images are enlargedly projected onto a screen, not shown, by the projection lens 1.

The polarization converting module 12 may be one identical to that disclosed in Japanese Laid-Open Patent Application JP-A-61090584 or Japanese Laid-Open Patent Application JP-A-63197913, and in the present embodiment, it is set so that the plane of polarization of emergent light may be P-polarized light relative to the first DM 11 located at the destination of emergence of the emergent light.

The LCDs 8, 6 and 4 are of the transmission type which forms a blue image, a green image and a red image, respectively, and modulate the illuminating light for each picture element constituting each color image by primary color image signals for the respective color images. This modulation is to rotate the plane of polarization of the emergent light by 90° relative to the incident light, and the LCDs 8, 6 and 4 each are a light modulator provided with a 90° twisted nematic liquid crystal layer.

The first DM 11 has the characteristic of transmitting the G light and the B light therethrough and reflecting the R light, the second DM 7 has the characteristic of transmitting the B light therethrough and reflecting the R light and the G light, and the third DM 2 has the characteristic of transmitting the R light and the G light therethrough and reflecting the B light.

Parallel white light is emitted from the light source 13, and the white light is converted into P-polarized white light P_{w} by the polarization converting module 12 and emerges. This polarized white light P_{w} enters the first DM 11 located at the destination of emergence thereof, and in this first DM 11, the R light component P_{R} is reflected and travels toward the λ/2 plate 10 located at the destination of reflection thereof, and a light component (P_{G} + P_{B}) including the G light component and the B light component which are the other components of the polarized white light P_{w} is transmitted through the first DM 11 and travels toward the second DM 7 located at the destination of emergence thereof. As regards the light component (P_{G} + P_{B}) transmitted through the first DM 11, the G light P_{G} is reflected by the second DM 7 and the B light P_{B} is transmitted therethrough. The reflected G light P_{G} becomes the illuminating light of the second LCD 6 for green image, and the transmitted B light P_{B} becomes the illuminating light of the third LCD for blue image.

On the other hand, the aforementioned R light P_{R} which has been reflected by the first DM 11 and has travelled toward the λ/2 plate 10 has its plane of polarization rotated by 90° and is converted into S-polarized R light S_{R} by being transmitted through the λ/2 plate 10, whereafter it is reflected by the total reflection mirror 9 and becomes the illuminating light of the first LCD 8 for red image. In this first LCD 8, the R light S_{R} transmitted through a picture element corresponding to the light portion of the primary color video signal has its plane of polarization rotated by 90° and is thereby made into P-polarized R light P_{R}, and the R light S_{R} transmitted through a picture element corresponding to the dark portion of the primary color video signal has its plane of polarization not rotated and is thereby made into S-polarized R light S_{R}, and these lights emerge from the first LCD 8. The R light P_{R} and R light S_{R} which have thus emerged travel toward the BS 5 located at the destination of emergence thereof, and the R light P_{R} is transmitted through the BS 5, while the R light S_{R} is reflected by the BS 5 and is deviated from the projection optical path. That is, the BS 5 functions as an analyzer for the first LCD 8. Therefore, the first LCD 8 is of a construction which does not have a polarizing filter as an analyzer.

Also, in the second LCD 6 for green image which uses as the illuminating light the G light P_{G} reflected by the second DM 7, the G light P_{G} transmitted through a picture element corresponding to the light portion of the primary color video signal has its plane of polarization rotated by 90° and is thereby made into S-polarized G light S_{G}, and the G light P_{G} transmitted through a picture element corresponding to the dark portion of the primary color video signal has its plane of polarization not rotated and is thereby made into P-polarized G light P_{G}, and these lights emerge from the second LCD 6. The G light S_{G} and G light P_{G} which have thus emerged travel toward the BS 5 located at the destination of emergence thereof and the G light P_{G} is transmitted through the BS 5 and is deviated from the projection optical path, while the G light S_{G} is reflected by the BS 5 and emerges from the first LCD 8 and is synthesized with the R light P_{R} transmitted through the BS 5 and emerges as a light component (P_{R} + S_{G}). That is, the BS 5 functions also as the analyzer of the second LCD 6 and further, effects color synthesis of the R light P_{R} and the G light S_{G}. Accordingly, the second LCD 6, like the first LCD 8, is of a construction which does not have a polarizing filter as an analyzer.

On the other hand, in the third LCD 4 for blue image which uses as the illuminating light the B light P_{B} transmitted through the second DM 7, as in the case of the aforedescribed second LCD 6, the B light P_{B} transmitted through a picture element corresponding to the light portion of the primary color video signal has its plane of polarization rotated by 90° and is thereby made into S-polarized light S_{B} and emerges, and the B light P_{B} transmitted through a picture element corresponding to the dark portion of the primary color video signal has its plane of polarization not rotated and emerges as P-polarized B light P_{B}. The B light P_{B} and B light S_{B} which have thus emerged from the third LCD 4 travel toward the BS 3 located at the destination of emergence thereof, and in the BS 3, the B light S_{B} is reflected and travels toward the third DM 2 located at the destination of reflection thereof, while the B light P_{B} is transmitted through the BS 3 and is deviated from the projection optical path. That is, this BS 3, like the aforedescribed BS 5, functions as the analyzer of the third LCD 4 and therefore, the LCD 4, like the aforedescribed first and second LCDs 8 and 6, is of a construction which does not have a polarization filter as an analyzer.

The B light S_{B} reflected by the BS 3 is reflected on the third DM 2 and is synthesized with the light component (P_{R} + S_{G}) which has emerged from the BS 5 and is thereby made into synthesized light (S_{B} + S_{G} + P_{R}) and emerges toward the projection lens 1, and the red, green and blue images are enlargedly projected onto the screen, not shown, through the projection lens 1.

As described above, according to the present embodiment, the light corresponding to the dark portion of the image is emitted to the outside of the projection optical path and a polarizing filter as an analyzer is not used in the LCDs. Further, the BS as an analyzer (in the present embodiment, the BS 5) serves also as a color synthesizer and therefore, the optical system between the projection lens 1 and the LCDs 4, 6, 8 is not complicated and the back focal length does not become great. Also, because of the polarization converting module 12 being used, the white light emitted from the light source is converted into rectilinearly polarized light whose plane of polarization is uniform with a small loss and the rate of utilization of light is high.

A second embodiment of the present invention will now be described with reference to Figure 2.

Figure 2 shows the second embodiment of the present invention.

The construction of the present embodiment is basically similar to that of the aforedescribed first embodiment and in Figure 2, portions identical to those shown in Figure 1 are given reference characters identical to those in Figure 1.

The polarization converting module 12 of the present embodiment is set so that the emergent light therefrom may become S-polarized white light S_{W}. This polarized white light S_{W} is separated into lights of different colors (R light S_{R}, G light S_{G} and B light S_{B}) by a first dichroic mirror (DM) 11 and a second dichroic mirror (DM) 7. The R light S_{R}, after separated by the first DM 11, is reflected by a total reflection mirror 9 and becomes the illuminating light of a first LCD 8 for red image. The G light S_{G}, with the B light S_{B}, is transmitted through the first DM 11, whereafter it is reflected by the second DM 7 and is separated from the B light S_{B} and becomes the illuminating light of a second LCD 6 for green image. The B light S_{B} is transmitted through the second DM 7, whereafter it passes through a λ/2 plate 10 provided adjacent to the entrance surface of a third LCD 4 for blue image, and has its plane of polarization rotated by 90° by the λ/2 plate 10 and becomes P-polarized B light P_{B} and provides the illuminating light of the third LCD 4.

The R light S_{R} which has become the illuminating light of the first LCD 8 is subjected to modulation by the first LCD 8 and emerges as P-polarized R light P_{R} when it is transmitted through a picture element corresponding to the light portion of the first LCD 8, and is not subjected to modulation and emerges as S-polarized R light S_{R} when it is transmitted through a picture element corresponding to the dark portion of the first LCD 8. The R light P_{R} and R light S_{R} travel toward a third dichroic mirror (DM) 15 located at the destination of emergence thereof and having the characteristic of reflecting G light and B light and transmitting R light therethrough. Also, in the case of the second LCD 6, as in the case of the first LCD 8, the G light S_{G} which has become the illuminating light thereof is subjected to modulation by the second LCD 6 and emerges as G light P_{G} when it is transmitted through a picture element corresponding to the light portion of the second LCD 6, and is not subjected to modulation and emerges as G light S_{G} when it is transmitted through a picture element corresponding to the dark portion of the second LCD 6. The G light P_{G} and G light S_{G} which have thus emerged travel toward the third DM 15 located at the destination of emergence thereof.

The R light P_{R} and R light S_{R} which have emerged from the first LCD 8 and the G light P_{G} and G light S_{G} which have emerged from the second LCD 6 are synthesized by the third DM 15, and travel as a light component (P_{G} + P_{R}) corresponding to the light portion and a light component (S_{G} + S_{R}), not shown, corresponding to the dark portion which has a plane of polarization orthogonal to the plane of polarization of the light component (P_{G} + P_{R}) toward the BS 5 located at the destination of emergence thereof.

On the other hand, the P-polarized B light P_{B} which has become the illuminating light of the third LCD 4 as previously described is subjected to modulation by the third LCD 4 and emerges as S-polarized B light S_{B} when it is transmitted through a picture element corresponding to the light portion of the third LCD 4, and is not subjected to modulation by the third LCD 4 and emerges as B light P_{B} when it is transmitted through a picture element corresponding to the dark portion of the third LCD 4. The B light P_{B} and B light S_{B} which have thus emerged are reflected by a total reflection mirror 14 located at the destination of emergence thereof, and further travel toward the BS 5 located at the destination of reflection thereof. The light components (P_{G} + P_{R}) and (S_{G} + S_{R}) which have emerged from the third DM 15 and the B light P_{B} and B light S_{B} reflected by the total reflection mirror 14 enter the BS 5, and the B light P_{B} corresponding to the dark portion of the third LCD 4 is transmitted through the BS 5 and is deviated from the projection optical path and further, the light component (S_{R} + S_{G}) corresponding to the dark portions of the first and second LCDs 8 and 6 is reflected by the BS 5 and is deviated from the projection optical path. Also, the B light S_{B} corresponding to the light portion of the third LCD 4 is reflected by the BS 5 and therefore is synthesized with the light component (P_{G} + P_{R}) corresponding to the light portions of the first and second LCDs 8 and 6 and transmitted through the BS 5 and becomes synthesized light (S_{B} + P_{G} + P_{R}). That is, this BS 5 has the color synthesizing function and at the same time, provides an analyzer for the LCDs 8, 6 and 4. Accordingly, again in the present embodiment, the LCDs 4, 6 and 8 are of a construction which does not have a polarizing filter as an analyzer.

The synthesized light (S_{B} + P_{G} + P_{R}) synthesized by the BS 5 is enlargedly projected onto an outside screen through the projection lens 1.

Again in the present embodiment, as in the aforedescribed embodiment, each LCD is of a construction which does not require a polarizing filter. Also, the back focal length is similar to that in the previous embodiment.

A third embodiment of the present invention will now be described.

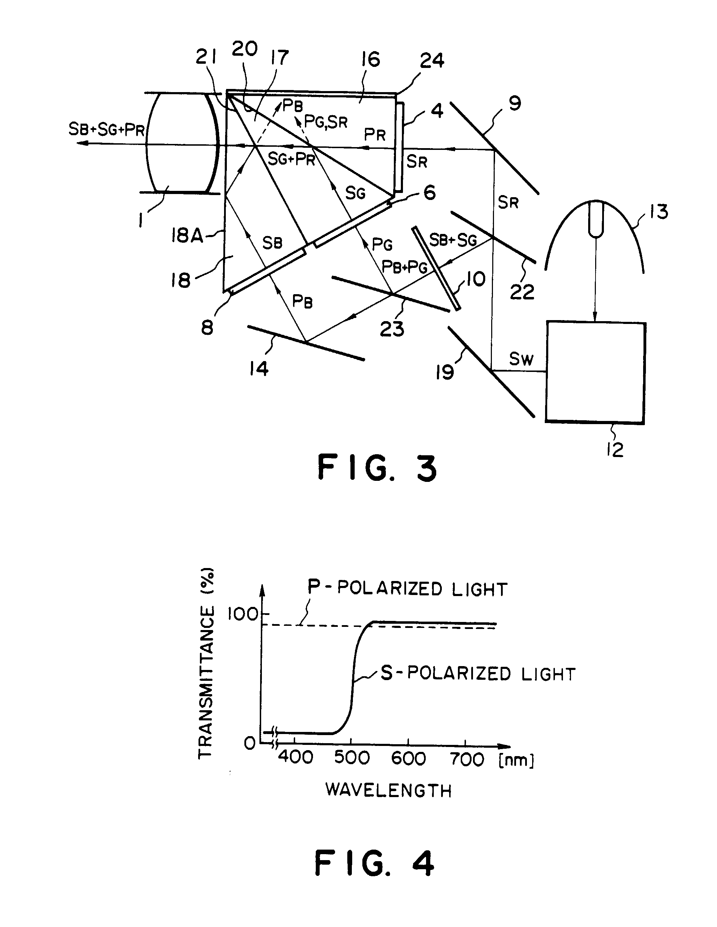

Figure 3 shows the third embodiment of the present invention.

The present embodiment is characterized in that triangle pole type first to third prisms 16, 17 and 18 each having as a cross-section a right-angled triangle having interior angles of 30°, 60° and 90° are joined together, a first BS 20 is provided on the interface between the first prism 16 and the second prism 17 and a second BS 21 is provided on the interface between the second prism 17 and the third prism 18 to thereby constitute a color synthesizing optical system.

This color synthesizing optical system is such that in the cross-sections of the first to third prisms 16, 17 and 18, with each vertex of the interior angle 30° as the center, the first and second prisms 16 and 17 are joined together by the sides thereof corresponding to the oblique lines opposed to the vertex of 90° and the second and third prisms 17 and 18 are joined together by the sides thereof opposed to the vertex of the interior angle 60°. Further, in the cross-sections of the first to third prisms 16, 17 and 18, the sides thereof opposed to the vertex of the interior angle 30° provide entrance portions for color lights (R light, G light and B light), and a third LCD 4 for a red image, a second LCD 6 for green image and a first LCD 8 for blue image are attached to the entrance portions.

The second BS 21 provided on the interface between the second prism 17 and the third prism 18 has the transmitting characteristic as shown in Figure 4, and transmits all wavelengths therethrough when P-polarized light enters it, but transmits therethrough lights of more than a wavelength of about 500 nm and reflects S-polarized lights of the other wavelengths. That is, in S-polarized lights, B light (a wavelength of 500 nm or less) is reflected and R light (a wavelength of 580 nm or more) and G light (a wavelength of 500-580 nm) are transmitted.

Also, in the fore stage portion of the above-described color synthesizing optical system, there is provided a color separating optical system for separating white color emitted by the power source into various color lights, said separating optical system being comprised of first and second dichroic mirrors (DM) 22 and 23, total reflection mirrors 9, 14, 19, a λ/2 plate 10 and a polarization converting module 12.

The lights of various colors separated by this color separating optical system are designed to enter perpendicularly to the entrance surfaces of the first to third LCDs 8, 6 and 4 attached to the entrance portion of the aforedescribed color synthesizing optical system, and particularly the optic axis concerned with the third LCD 4 is continuous from the projection optical path of the projection lens 1. Therefore, the air interface 18A of the third prism 18 which is the exit portion of the color synthesizing optical system forms an angle of 90° with respect to the projection optical path of the projection lens 1.

Further, the side of the first prism 16 which is opposed to the vertex of the interior angle 60° is parallel to the aforementioned projection optical path, and is provided with a light absorbing layer 24 for absorbing the color light component which has deviated from the projection optical path.

The operation of the present embodiment will now be described. The white light from the light source 13 is converted into S-polarized white light S_{W} by the polarization converting module 12 and emerges therefrom. This polarized white light S_{W} is reflected by the total reflection mirror 19 and arrives at the first DM 22 having the characteristic of transmitting R light therethrough and reflecting B light and G light. The polarized white light S_{W} is divided into R light S_{R} and a light component (S_{B} + S_{G}) by the first DM 22, and the R light S_{R} transmitted through the first DM 22 is reflected by the total reflection mirror 9 and becomes the illuminating light of the third LCD 4. Also, the light component (S_{B} + S_{G}) reflected by the first DM 22 is converted into a P-polarized light component (P_{B} + P_{G}) by the λ/2 plate 10, whereafter it is divided into G light P_{G} and B light P_{B} by the second DM 23 having the characteristic of transmitting the B light therethrough and reflecting the R light and G light, and the G light P_{G} reflected by the second DM 23 becomes the illuminating light of the second LCD 6. The B light P_{B} transmitted through the second DM 23 is reflected by the total reflection mirror 14 and becomes the illuminating light of the first LCD 8.

As regards the aforedescribed R light S_{R} which has become the illuminating light of the third LCD 4, as in the aforedescribed embodiments, the portion (image) thereof corresponding to the light portion is subjected to modulation and emerges as P-polarized R light P_{R} from the third LCD 4 and the portion thereof corresponding to the dark portion is not subjected to modulation and energes as R light S_{R} from the third LCD 4.

Likewise, as regards the G light P_{G} and B light P_{B} which have become the illuminating lights of the first and second LCDs 8 and 6, the portions (picture elements) thereof corresponding to the light portions are subjected to modulation and emerge as S-polarized G light S_{G} and B light S_{B} from the first and second LCDs 8 and 6, respectively, and the portions thereof corresponding to the dark portions are not subjected to modulation and emerge as G light P_{G} and B light P_{B} from the first and second LCDs 8 and 6, respectively.

The R light P_{R} and R light S_{R} which have emerged from the third LCD 4 travel toward the interface between the first prism 16 and the second prism 17, and when they pass through said interface, the R light S_{R} corresponding to the dark portion is reflected as indicated by dotted line by the first BS 20 provided on said interface and deviates from the projection optical path, while the R light P_{R} corresponding to the light portion is transmitted through the first BS 20. The G light P_{G} and G light S_{G} which have emerged from the second LCD 6 likewise travel toward the interface between the first prism 16 and the second prism 17, and the G light P_{G} corresponding to the dark portion is transmitted through the first BS 20 on said interface and deviates from the projection optical path, while the G light S_{G} corresponding to the light portion is reflected and is synthesized with the R light P_{R} transmitted through the first BS 20 and becomes a light component (S_{B} + P_{R}), which travels toward the second BS 21 on the interface between the second prism 17 and the third prism 18. Thus, the first BS 20 has the function of color-synthesizing the R light and G light and the function as the analyzer of the second LCD 6 and the third LCD 4, and again in the present embodiment, the second LCD 6 and the third LCD 4 are of a construction which does not have a polarizing filter as an analyzer.

On the other hand, the B light P_{B} and B light S_{B} which have emerged from the first LCD 8 first travel toward the air interface 18A of the third prism 18 and are reflected by this interface 18A, and then travel toward the second BS 21 provided on the interface between the second prism 17 and the third prism 18. This second BS 21, as previously described, has the characteristic of reflecting only S-polarized B light and therefore, as regards the B lights which have emerged from the first LCD 8, the B light P_{B} corresponding to the dark portion is transmitted as indicated by dotted line and deviates from the projection optical path, while the B light S_{B} corresponding to the light portion is reflected and synthesized with the light component (S_{G} + P_{R}) transmitted through the second BS 21, by the first BS 20. Thus, this second BS 21 has the function of color-synthesizing the R light, G light and B light and the function as the analyzer of the first LCD 8, and this first LCD 8, like the aforedescribed second and third LCDs 6 and 4, is of a construction which does not have a polarizing filter as an analyzer.

The R light S_{R}, G light P_{G} and B light P_{B} corresponding to the dark portions of the respective color images which deviate from the projection optical path are absorbed by the light absorbing layer 24.

The present embodiment has an effect similar to that of the aforedescribed first and second embodiments and also has the effect that the back focal length is shortened to √3/2·n (n: refractive index of the prisms 16, 17, 18) as converted into air length, relative to the aforedescribed embodiments.

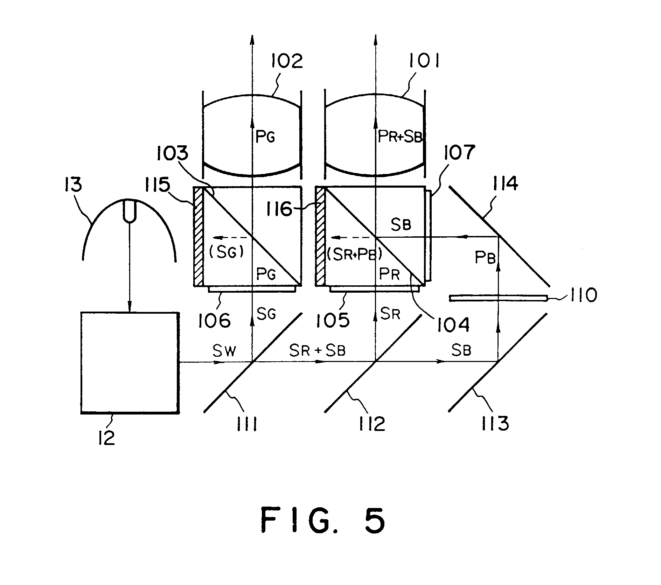

A fourth embodiment of the present invention will now be described with reference to Figure 5.

The liquid crystal projector of the present embodiment is provided with a polarization converting module 12 for converting white light emitted by a white light source provided with a high-luminance lamp into rectilinearly polarized light, and is of a construction in which the rectilinearly polarized light is separated into R light, G light and B light of red, green and blue colors, respectively, and as will be described later, by first and second dichroic mirrors (hereinafter referred to as the "DMs") 111 and 112, two total reflection mirrors 113 and 114 and a λ/2 plate 110, the R light, G light and B light are applied to first to third liquid crystal devices (hereinafter referred to as the "LCDs") 105, 106 and 107 for modulating the R light, G light and B light in conformity with a video signal and forming respective color images and the R light and B light which have emerged from the first and third LCDs 105 and 107, respectively, are synthesized by a polarizing beam splitter (hereinafter referred to as the "BS") 104, whereafter the synthesized light is enlargedly projected through a first projection lens 101 and the G light which has emerged from the second LCD 106 is enlargedly projected through a BS 103 and a second projection lens 102, and the synthesized image of red and blue images by the R light and B light projected from the first projection lens 101 and the green image by the G light projected from the second projection lens 102 are superposed one upon the other on a screen, not shown.

The polarization converting module 12, like those in the above-described embodiments, efficiently converts the white light from the light source into rectilinearly polarized light and emits it, and in the present embodiment, it is set so that the white light may become S-polarized white light S_{W} relative to the first DM 111 located at the destination of emergence thereof.

The first to third LCDs 105, 106 and 107 are of the transmission type forming a red image, a green image and a blue image, respectively, and effect the modulation of illuminating light for each picture element on the basis of primary color video signals for respective color images. This modulation is such that the plane of polarization of the emergent light is rotated by 90° relative to the incident light, and is the same as the modulation effected by the LCDs 4, 6 and 8 in the embodiment shown in Figure 1.

The first DM 111 has the characteristic of reflecting the G light and transmitting the R light and B light therethrough, and the second DM 112 has the characteristic of reflecting the R light and transmitting the G light and B light therethrough.

Also, in the present embodiment, there are provided a light absorbing layer 116 for absorbing the lights corresponding to the dark portions of the red and blue images which emerge from the first and third LCDs 105 and 107, and a light absorbing layer 115 for absorbing the light corresponding to the dark portion of the blue image which emerges from the second LCD 106.

The operation of the present embodiment will now be described.

The white light emitted from the light source 13 is converted into polarized white light S_{W} by the polarization converting module 12 and emerges therefrom. This polarized white light S_{W} first enters the first DM 111 located at the destination of emergence thereof, and is thereby divided into S-polarized G light S_{G} and a light component (S_{R} + S_{B}) of S-polarized R light and B light, and the G light S_{G} reflected by the first DM 111 becomes the illuminating light of the second LCD 106.

The light component (S_{R} + S_{B}) transmitted through the first DM 111 subsequently enters the second DM 112 and is thereby divided into R light S_{R} and B light S_{E}, and the R light S_{R} reflected by the second DM 112 becomes the illuminating light of the first LCD 106. The B light S_{E} is transmitted through the second DM 112, whereafter it is reflected by the total reflection mirror 113 and is transmitted through the λ/2 plate 110, and has its plane of polarization rotated by 90° by the λ/2 plate 110 and is converted into P-polarized B light P_{B}. This B light P_{B} emerges from the λ/2 plate 110, whereafter it is reflected by the total reflection mirror 114 and becomes the illuminating light of the third LCD 107.

The G light S_{G} which has passed through the second LCD 106, as previously described, has its plane of polarization rotated by 90° and emerges as P-polarized G light P_{G} when it is transmitted through a picture element in the second LCD 106 which corresponds to the light portion of an image indicated by a primary color video signal, and has its plane of polarization not rotated and emerges intactly as the S-polarized G light S_{G} when it is transmitted through a picture element corresponding to the dark portion of the image indicated by the primary color video signal. The G light P_{G} and G light S_{G} which have emerged from the second LCD 106 enter the BS 103 located at the destination of emergence thereof, and the G light S_{G} corresponding to the dark portion of the green image is reflected by the BS 103 and deviates from the projection optical path and is absorbed by the aforedescribed light absorbing layer 115. On the other hand, the G light P_{G} corresponding to the light portion of the green image which has been transmitted through the BS 103 is projected onto the screen through the second projection lens 102. In this case, the BS 103 acts as an analyzer for the second LCD 106 and therefore, the second LCD 106 is of a construction which does not have a polarizing filter as an analyzer.

Also, the R light S_{R} which has become the illuminating light of the first LCD 105, like the aforedescribed G light S_{G} which has become the illuminating light of the second LCD 106, has its plane of polarization rotated and emerges as P-polarized R light P_{R} from the first LCD 105 when it is transmitted through a picture element in the first LCD 105 which corresponds to the light portion of an image indicated by the primary color video signal, and emerges intactly as the S-polarized R light S_{R} when it is transmitted through a picture element corresponding to the dark portion of said image.

On the other hand, the B light P_{B} which has become the illuminating light of the third LCD 107 has its plane of polarization rotated and emerges as S-polarized B light S_{B} from the third LCD 107 when it is transmitted through a picture element in the third LCD 107 which corresponds to the light portion of the image indicated by the primary color video signal, and has its plane of polarization not rotated and emerges intactly as the P-polarized B light P_{B} when it is transmitted through a picture element corresponding to the dark portion of said image.

The R light P_{R} and R light S_{R} and the B light P_{B} and B light S_{B} which have emerged from the first LCD 105 and the third LCD 107, respectively, as described above, travel toward the BS 104 located at the destination of emergence thereof. At this time, the R light S_{R} corresponding to the dark portion of the red image which emerges from the first LCD 105 is reflected by the BS 104 and deviates from the projection optical path, and further, the B light P_{B} corresponding to the dark portion of the blue image which emerges from the third LCD 107 is transmitted through the SB 104 and deviates from the projection optical path. The R light S_{R} and B light P_{B} which have deviated from the projection optical path are both absorbed by the aforedescribed light absorbing layer 116. On the other hand, the R light P_{R} corresponding to the light portion of the red image which emerges from the first LCD 105 is transmitted through the BS 104 and the B light S_{B} emerging from the third LCD 107 and corresponding to the light portion of the blue image is reflected by the BS 104 and therefore, the R light P_{R} and the B light S_{B} are synthesized into synthesized light (P_{R} + S_{B}) by the BS 104, and the synthesized light is enlargedly projected onto a screen, not shown, through the first projection lens 101.

That is, the BS 104 acts as color synthesizing means for synthesizing the R light and the B light and also acts as an analyzer for the first LCD 105 and the third LCD 107 and therefore, the first and third LCDs 105 and 107, like the aforedescribed second LCD 106, are of a construction which does not have a polarizing filter as an analyzer.

The projector described above achieves the following effects.

In the liquid crystal devices,.a polarizing filter as an analyzer becomes unnecessary and therefore, there is no temperature rise of the liquid crystal devices caused by the absorption of light by the polarizing filter and it becomes readily possible to increase the intensity of the light of the light source and achieve high luminance.

The polarizing beam splitters provided as the analyzers of the liquid crystal devices serve also as color synthesizing means and therefore, the structure of the optical system becomes simple and the back focal length does not become long.

An image projector has a device for supplying a first light exhibiting a first color and a second light exhibiting a second color differing from the first color, a first generator for modulating the first light and generating a first image by polarized lights whose planes of polarization are orthogonal to each other, a second generator for modulating the second light and generating a second image by polarized lights whose planes of polarization are orthogonal to each other, an optical coupler for reflecting one of the polarized lights from the first generator and transmitting the other therethrough and transmitting therethrough one of the polarized lights from the second generator and reflecting the other, and a projection optical system for receiving the one polarized light from the first generator and the one polarized light from the second generator through the coupler, and projecting the first and second images by these polarized lights.

## Claims

1. An image projector having
a light source (13) for irradiating a light beam including light having at least two colors,
changing means (12) for changing said light beam including said light having said two colors into a single polarization light,
splitting means (7, 11; 22, 23; 111, 112) for splitting said single polarization light to produce a first light beam and a second light beam having different colors,
means (10; 110) for making polarization directions of the produced light beams of said two colors orthogonal,
a first generator (4, 6; 8; 107) for modulating said first light beam and generating a first image comprising polarized light beams whose planes of polarization are orthogonal to each other,
a second generator (4; 6, 8; 105) for modulating said second light beam and generating a second image comprising polarized light beams whose planes of polarization are orthogonal to each other,
an optical coupler (2, 3, 5; 15; 16, 17, 18; 20, 21; 104, 111, 112) comprising at least one dichroic mirror (2; 15; 21; 111, 112) and at least one polarizing beam splitter (3, 5; 16, 17, 18; 20; 104), and for transmitting a first of said polarized light beams from said first generator (8; 105) therethrough and reflecting a second of said polarized light beams and reflecting a first of said polarized light beams from said second generator (4, 6; 107) and transmitting a second of said polarized light beams therethrough, and
a projection optical system (1; 101, 102) for receiving said first polarized light beam from said first generator (8; 105) and said first polarized beam from said second generator (4, 6; 107) through said optical coupler (2, 3, 5; 15; 16, 17, 18; 104, 111, 112) and projecting said first and second images using these first polarized light beams
**characterized in that**
said first and second generators are of light transmission type and said optical coupler (2, 3, 5; 15; 16, 17, 18; 104, 111, 112) functions as an analyzer for the first and second generators by directing said first polarized light beams to said projection optical system (1; 101, 102) and directing said second polarized beams out of an optical path of said projection optical system (1; 101, 102).

2. An image projector according to claim 1,
**characterized in that**
said splitting means comprises two dichroic mirrors (7, 11) which produce a first, a second and a third light beam (S_{R}, S_{B}, S_{G}), wherein the first dichroic mirror (11) separates a first light beam (S_{R}) of a first color from said single polarization light and the second dichroic mirror (7) separates second and third light beams (S_{G}, S_{B}) of a second and third color,
three generators are provided which respectively comprise first, second and third liquid crystal light modulators (4, 6, 8) for polarizing said first, second and third light beams (S_{R}, S_{G}, S_{B}),
said means for making polarizations directions orthogonal is provided adjacent to the entrance surface of the third liquid crystal light modulator (4),
said optical coupler comprises
a dichroic mirror (15) transmitting said first light beam (P_{R}) after being polarized by said first liquid crystal light modulator (8) and reflecting said second light beam (P_{G}) after being polarized by said second liquid crystal light modulator (6) and
a polarizing beam splitter (5) for transmitting said polarized first and second light beams (P_{R}, P_{G}) and reflecting said third light beam (S_{B}) after being orthogonally polarized and after being polarized by said third liquid crystal light modulator (4).

3. An image projector according to claim 1 or 2,
**characterized in that**
said light source (13) includes a lamp emitting white light and said changing means (12) convert said white light into rectilinearly polarized light.

4. An image projector according to any of claims 1 to 3,
**characterized in that**
said projection optical system (1; 101, 102) comprises a single projection lens system.

5. An image projector according to any of claims 1 to 3,
**characterized in that**
said projection optical system (1; 101, 102) is provided with a first projection lens system (101) and a second projection lens system (102).

6. An image projector according to any of claims 2 to 5,
**characterized in that**
said first, second and third liquid crystal light modulators (4, 6, 8) effect said modulation by controlling of the liquid crystal molecules thereof in conformity with video signals of the first, second and third colors respectively.

## Patentansprüche

1. Bildprojektor mit
einer Lichtquelle (13) zum Ausstrahlen eines Lichtstrahls, der ein Licht umfaßt, das zumindest zwei Farben aufweist,
einer Änderungseinrichtung (12) zum Ändern des Lichtstrahls mit dem Licht, daß die zwei Farben hat, in ein einzelnes Polarisationslicht,
einer Teilereinrichtung (7, 11; 22, 23; 111, 112) zum Teilen des einzelnen Polarisationslichts, um einen ersten Lichtstrahl und einen zweiten Lichtstrahl zu erzeugen, die unterschiedliche Farben haben,
einer Einrichtung (10; 110) zum senkrechten Ausrichten der Polarisationsrichtungen der erzeugten Lichtstrahlen mit den zwei Farben,
einem ersten Generator (4, 6; 8; 107) zum Modulieren des ersten Lichtstrahls und zum Erzeugen eines ersten Bildes, das polarisierte Lichtstrahlen aufweist, deren Polarisationsebenen senkrecht aufeinanderstehen,
einem zweiten Generator (4; 6, 8; 105) zum Modulieren des zweiten Lichtstrahls und zum Erzeugen eines zweiten Bildes, das polarisierte Lichtstrahlen aufweist, deren Polarisationsebenen senkrecht aufeinander stehen,
einem optischen Koppler (2, 3, 5; 15; 16 17, 18; 20, 21; 104, 111, 112), der zumindest einen dichroitischen Spiegel (2; 15; 21; 111, 112) und zumindest einen Polarisationsstrahlenteiler (3, 5; 16, 17, 18; 20; 104) aufweist, und der einen ersten der polarisierten Lichtstrahlen aus dem ersten Generator (8; 105) überträgt und einen zweiten der polarisierten Lichtstrahlen reflektiert, und der einen ersten der polarisierten Lichtstrahlen von dem zweiten Generator (4, 6; 107) reflektiert und einen zweiten der polarisierten Lichtstrahlen überträgt, und
einem optischen Projektionssystem (1; 101, 102) zum Empfangen des ersten polarisierten Lichtstrahls von dem ersten Generator (8; 105) und des ersten polarisierten Lichtstrahls von dem zweiten Generator (4, 6; 107) durch den optischen Koppler (2,3, 5; 15; 16, 17, 18; 104, 111, 112) und zum Projizieren des ersten und zweiten Bildes unter Verwendung dieser ersten, polarisierten Lichtstrahlen,
**dadurch gekennzeichnet, daß**
der erste und zweite Generator in lichtdurchlässiger Bauweise sind und der optische Koppler (2, 3, 5; 15; 16, 17, 18; 104, 111, 112) als ein Analysator für den ersten und zweiten Generator wirkt, indem die ersten, polarisierten Lichtstrahlen auf das optische
Projektionssystem (1; 101, 102) geleitet werden, und indem die zweiten polarisierten Lichtstrahlen aus einer optischen Bahn des optischen Projektionssystems (1; 101, 102) abgeleitet werden.

2. Bildprojektor nach Anspruch 1,
**dadurch gekennzeichnet, daß**
die Teilereinrichtung zwei dichroitische Spiegel (7, 11) aufweist, die einen ersten, zweiten und einen dritten Lichtstrahl (S_{R}, S_{B}, S_{G}) erzeugen, wobei der erste dichroitische Spiegel (11) einen ersten Lichtstrahl (S_{R}) einer ersten Farbe von dem einzigen Polarisationslicht abteilt, und der zweite dichroitische Spiegel (7) den zweiten und dritten Lichtstrahl (S_{G}, S_{B}) einer zweiten und dritten Farbe abteilt, wobei
drei Generatoren vorgesehen sind, die jeweils einen ersten, zweiten und dritten Flüssigkeitskristalllichtmodulator (4, 6, 8) zum Polarisieren des ersten, zweiten und dritten Lichtstrahls (S_{R}, S_{G}, S_{B}) aufweisen, wobei
die Einrichtung zum senkrechten Ausrichten der Polarisationsrichtungen in der Nähe der Eintrittsfläche des dritten Flüssigkeitskristalllichtmodulators (4) vorgesehen ist, wobei
der optische Koppler
einen dichroitischen Spiegel (15), der den ersten Lichtstrahl (P_{R}) überträgt, nachdem er durch den ersten Flüssigkeitskristalllichtmodulator (8) polarisiert ist, und den zweiten Lichtstrahl (P_{G}) reflektiert, nachdem er durch den zweiten Flüssigkeitskristalllichtmodulator (6) polarisiert ist und
einen Polarisationsstrahlenteiler (5) aufweist, der die polarisierten ersten und zweiten Lichtstrahlen (PR, P_{G}) überträgt und den dritten Lichtstrahl (S_{B}) reflektiert, nachdem er senkrecht polarisiert worden ist und nachdem er durch den dritten Flüssigkeitskristalllichtmodulator (4) polarisiert worden ist.

3. Bildprojektor nach Anspruch 1 oder 2,
**dadurch gekennzeichnet, daß**
die Lichtquelle (13) eine Lampe umfaßt, die weißes Licht ausstrahlt und daß die Veränderungseinrichtung (12) das weiße Licht in geradlinig polarisiertes Licht umwandelt.

4. Bildprojektor nach einem der Ansprüche 1 bis 3,
**dadurch gekennzeichnet, daß**
das optische Projektionssystem (1; 101, 102) ein einzelnes Projektionslinsensystem aufweist.

5. Bildprojektor nach einem der Ansprüche 1 bis 3,
**dadurch gekennzeichnet, daß**
das optische Projektionssystem (1; 101, 102) mit einem ersten Projektionslinsensystem (101) und einem zweiten Projektionslinsensystem (102) versehen ist.

6. Bildprojektor nach einem der Ansprüche 2 bis 5,
**dadurch gekennzeichnet, daß**
der erste, zweite und dritte Flüssigkeitskristalllichtmodulator (4, 6, 8) die Modulation bewirken, indem deren Flüssigkeitskristallmoleküle jeweils in Übereinstimmung mit Videosignalen der ersten, zweiten und dritten Farbe geregelt werden.

## Revendications

1. Projecteur d'image comportant
une source de lumière (13) pour irradier un faisceau lumineux comprenant une lumière ayant au moins deux couleurs,
des moyens de changement (12) pour changer ledit faisceau lumineux comprenant ladite lumière ayant lesdites deux couleurs en une seule lumière de polarisation,
des moyens de division (7, 11 ; 22, 23 ; 111, 112) pour diviser ladite unique lumière de polarisation pour produire un premier faisceau lumineux et un deuxième faisceau lumineux ayant des couleurs différentes,
des moyens (10 ; 110) pour rendre orthogonales les directions de polarisation des faisceaux lumineux produits desdites deux couleurs,
un premier générateur (4, 6 ; 8 ; 107) pour moduler ledit premier faisceau lumineux et générer une première image comprenant les faisceaux lumineux polarisés dont les plans de polarisation sont orthogonaux les uns par rapport aux autres,
un deuxième générateur (4 ; 6, 8 ; 105) pour moduler ledit deuxième faisceau lumineux et générer une deuxième image comprenant les faisceaux lumineux polarisés dont les plans de polarisation sont orthogonaux les uns par rapport aux autres,
un coupleur optique (2, 3, 5 ; 15 ; 16, 17, 18 20, 21 ; 104, 111, 112) comprenant au moins un miroir dichroïque (2 ; 15 ; 21 ; 111, 112) et au moins un diviseur de faisceau de polarisation (3, 5 ; 16, 17, 18 ; 20 ; 104), et destiné à transmettre un premier faisceau parmi lesdits faisceaux lumineux polarisés à partir dudit premier générateur (8 105) à travers celui-ci, et réfléchir un deuxième faisceau parmi lesdits faisceaux lumineux polarisés, et réfléchir un premier faisceau parmi lesdits faisceaux lumineux polarisés à partir dudit deuxième générateur (4, 6 ; 107) et transmettre un deuxième faisceau parmi lesdits faisceaux lumineux polarisés à travers celui-ci, et
un système optique de projection (1 ; 101, 102) pour recevoir ledit premier faisceau lumineux polarisé à partir dudit premier générateur (8 ; 105) et ledit premier faisceau polarisé à partir dudit deuxième générateur (4, 6 ; 107) à travers ledit coupleur optique (2, 3, 5 ; 15 ; 16, 17, 18 ; 104, 111, 112) et projeter lesdites première et deuxième images à l'aide de ces premiers faisceaux lumineux polarisés
caractérisé en ce que
lesdits premier et deuxième générateurs sont du type à transmission lumineuse et ledit coupleur optique (2, 3, 5 ; 15 ; 16, 17, 18 ; 104, 111, 112) fait office d'analyseur pour les premier et deuxième générateurs en dirigeant lesdits premiers faisceaux de lumière polarisés vers ledit système optique de projection (1 ; 101, 102) et en dirigeant lesdits deuxièmes faisceaux polarisés hors d'un chemin optique dudit système optique de projection (1 ; 101, 102).

2. Projecteur d'image selon la revendication 1,
caractérisé en ce que
lesdits moyens de division comprennent deux miroirs dichroïques (7, 11) qui produisent un premier, un deuxième et un troisième faisceau lumineux (S_{R}, S_{B}, S_{G}), dans lesquels le premier miroir dichroïque (11) sépare un premier faisceau lumineux (S_{R}) d'une première couleur de ladite seule lumière de polarisation et le deuxième miroir dichroïque (7) sépare les deuxième et troisième faisceaux lumineux (S_{G}, S_{B}) d'une deuxième et troisième couleur,
trois générateurs sont prévus, qui comprennent respectivement des premier, deuxième et troisième modulateurs de lumière à cristaux liquides (4, 6, 8) pour polariser lesdits premier, deuxième et troisième faisceaux lumineux (S_{R}, S_{B}, S_{G}),
lesdits moyens pour rendre orthogonales les directions de polarisation sont prévus en position adjacente à la surface d'entrée du troisième modulateur de lumière à cristaux liquides (4),
ledit coupleur optique comprend
un miroir dichroïque (15) transmettant ledit premier faisceau lumineux (P_{R}) une fois polarisé par ledit premier modulateur de lumière à cristaux liquides (8) et réfléchissant ledit deuxième faisceau lumineux (P_{G}) une fois polarisé par ledit deuxième modulateur de lumière à cristaux liquides (6) et
un diviseur de faisceau de polarisation (5) pour transmettre lesdits premier et deuxième faisceaux lumineux polarisés (P_{R}, P_{G}) et pour réfléchir ledit troisième faisceau lumineux (S_{B}) une fois polarisé orthogonalement et une fois polarisé par ledit troisième modulateur de lumière à cristaux liquides (4).

3. Projecteur d'image selon la revendication 1 ou 2,
caractérisé en ce que
ladite source de lumière (13) comprend une lampe émettant une lumière blanche et lesdits moyens de changement (12) convertissent ladite lumière blanche en une lumière polarisée de manière rectiligne.

4. Projecteur d'image selon l'une quelconque des revendications 1 à 3,
caractérisé en ce que
ledit système optique de projection (1 ; 101, 102) comprend un système unique de lentille de projection.

5. Projecteur d'image selon l'une quelconque des revendications 1 à 3, caractérisé en ce que
ledit système optique de projection (1 ; 101, 102) est muni d'un premier système de lentille de projection (101) et d'un deuxième système de lentille de projection (102).

6. Projecteur d'image selon l'une quelconque des revendications 2 à 5,
caractérisé en ce que
lesdits premier, deuxième et troisième modulateurs de lumière à cristaux liquides (4, 6, 8) effectuent ladite modulation en contrôlant les molécules de cristaux liquides de ceux-ci conformément à des signaux vidéo des première, deuxième et troisième couleurs, respectivement.
